# EUROPEAN PATENT APPLICATION

(11) **EP 2 067 411 A1**
(43) Date of publication of application: **10.06.2009**
(21) Application number: 07425760.1
(22) Date of filing: 29.11.2007
(51) Int. Cl.: A23L 1/305

(54) **Food composition usable as substitute meal**

(71) Applicant: Paolo Oddenino Paris S.R.L., 10028 Trofarello (TO) (IT)
(72) Inventor: Oddenino, Paolo, 10028 Trofarello (TO) (IT)
(74) Representative: Robba, Pierpaolo

(57) **Abstract**

Food integrator containing amino acids to be used for reaching and/or maintaining the ideal weight, said integrator being usable as substitute meal and comprising at least eight essential amino acids, preferably L-leucine, L-valine, L-isoleucine, L-lysine, L-phenylalanine, L-threonine, L-methionine and L-tryptophan.

## Description

The invention relates to food integrators containing amino acids.

More precisely, the invention relates to food integrators containing amino acids to be used for reaching and/or maintaining the ideal weight.

Since the Fifties of the 20^{th} century, researches have been carried out in order to correlate the body weight with the frequency of diseases onset and with the mortality tax; it has been found that, for instance, a body weight "increased" with respect to the statistical mean value is the main reason of early death caused by cardiovascular diseases.

A study by the World Health Organization published in 2002 confirms that the overweight appears to be the fifth of the ten main reasons of death and it associates said overweight, in the western countries, to a mean loss of about 7.5 years of life.

Therefore, the interest is clear in suitably responding to the target that an increasing number of people sets to themselves, that is to achieve and maintain their ideal weight, not only for aesthetic reasons but above all for well-being and for living for a longer time.

Various methods exist to reach the ideal weight, but the better system, which does not imply excessive sacrifices and negative repercussions on health, is based on an adequate physical activity and on a well balanced nutritional program, in case conveniently improved with food integrators.

At present, a great number of food integrators are commercially available, which can be classified according to the following main kinds on the basis of their specific function:
- thermogenic integrators, which activate the metabolism by inducing the consumption of more calories even at rest;
- lipo-blocking integrators, which limit the absorption of fats;
- gluco-blocking integrators, which limit the absorption of carbohydrates; and
- ipocaloric substitutive meals, which replace lunch or dinner by giving a limited quantity of calories.

In addition or as an alternative to the aforesaid integrators intended for slimming, it is possible to take purifying integrators, which help the restoration of the right biliary and/or hepatic and/or renal performance; if the purifying integrator is taken alone, the results in terms of loss of weight will be obviously very modest and they will be obtained on rather long time periods, because the purifying integrators are not slimming specific products but they predispose the organism to a better use of the calories.

Food integrators nowadays known generally have the drawback of being metabolised in a slow and difficult way, while most of them appear to be also not much digestible.

The Applicant has now found a composition, belonging to the category of the above-mentioned ipocaloric substitutive meals, which overcomes the aforesaid drawbacks.

The composition according to the present invention therefore relates to a food integrator usable as substitutive meal.

Said composition, which helps to reach the ideal weight by replacing the normal meals, comprises at least eight essential amino acids, said at least eight essential amino acids preferably being L-leucine, L-valine, L-isoleucine, L-lysine, L-phenylalanine, L-threonine, L-methionine and L-tryptophan.

Said composition can also comprise at least one non-essential amino acid, said at least one non-essential amino acid preferably being histidine.

More precisely, 100 g of composition of the food integrator according to the invention contain:
- about 15 g of L-leucine,
- about 12 g of L-valine,
- about 11 g of L-isoleucine,
- about 0.8 g of L-lysine,
- about 10 g of L-phenylalanine,
- about 0.8 g of L-threonine,
- about 0.4 g of L-methionine, and
- about 0.3 g of L-tryptophan.

The additional components of said composition include excipients such as, for instance, thickening agents, emulsifiers, anti-caking agents, sweeteners and flavouring agents, commonly used in the field.

Each of the essential amino acids performs a fundamental function for the organism; particularly, leucine and isoleucine are involved in the mechanism of the hemoglobin formation, valine is important for the mental functions, the muscle coordination and the nerve functions, lysine takes part in the carnitine synthesis and helps the anti-bodies formation, phenylalanine takes part in the tyrosine synthesis in the presence of B6 and C vitamins and it is important for the normal functioning of the thyroid, threonine is important for the digestive functions as well as for the mental health, methionine has antioxidant and disintoxicating properties, it is involved in the production of choline, adrenaline, lecithin and B12 vitamin, and tryptophan takes place in the synthesis of B3 vitamin and makes the humour stable.

Histidine, non-essential amino acid, stimulates the production of red and white corpuscles and, when turned into histamine, it acts on the muscle functions and on the blood vessels dilatation.

The aforementioned amino acids used in said composition according to the invention are preferably under the form "L-", which is the same natural form of amino acids as found in plants or in the animal tissue, and they are more compatible with the biochemistry of the human body.

Preferably, said composition contains cellulose as thickening agent, soya lecithin as emulsifier, silicon dioxide as anti-caking agent and aspartame and/or potassium acesulfame with sweetening function.

In order to make said composition more palatable, an organoleptic improver flavouring agent is preferably added, for instance having orange flavour.

Preferably, said composition is in the powder form.

The suggested posology provides for taking about 10 g of said composition preferably dissolved into about 200 ml of water, preferably replacing lunch, preferably alternating between 2 consecutive days with said composition and 2 days with normal meals until reaching the ideal weight; the suggested posologic dose is absorbed by the human organism in about 20-25 minutes.

The food integrator according to said composition is metabolised inside the lean muscle mass and it does not produce bulkage.

The food integrator according to said composition, besides being useful for achieving the ideal weight, can be profitably used by people performing competitive activities, who are therefore subjected to considerable physical and mental stresses, in order to boost the energy power and to consequently improve their performances; in this case, said food integrator will be taken in addition to, an not in replacement of, the normal meal.

The food integrator according to the invention appears to be improving with respect to the currently existing and commercially available ones, because it provides for lower suggested posologic dosages.

Particularly, then, the food integrator containing amino acids according to the invention appears to be more easily digestible and metabolisable.

Though in the present description an exemplifying posology has been indicated for the composition of the food integrator according to the invention, the Applicant has developed a 24 tests system to be dispensed to the patient in order to identify his/her energy profile and to set a personalised nutritional program, also containing the specific prescription of said composition, to be taken simultaneously or as an alternative to other compositions of the same Applicant.

Moreover, it will be evident to the person skilled in the art that the composition according to the invention could be supplied under forms different from the one herein exemplified.

## Claims

1. Food integrator containing amino acids to be used for reaching and/or maintaining the ideal weight comprising at least eight essential amino acids.

2. Food integrator according to claim 1, wherein said at least eight essential amino acids are L-leucine, L-valine, L-isoleucine, L-lysine, L-phenylalanine, L-threonine, L-methionine and L-tryptophan.

3. Food integrator according to claim 1 or 2, having the following composition:
- about 15 g of L-leucine,
- about 12 g of L-valine,
- about 11 g of L-isoleucine,
- about 0.8 g of L-lysine,
- about 10 g of L-phenylalanine,
- about 0.8 g of L-threonine,
- about 0.4 g of L-methionine,
- about 0.3 g of L-tryptophan, and
- complement on 100 mg: excipients.

4. Food integrator according to claim 1, further comprising at least one non-essential amino acid.

5. Food integrator according to claim 4, wherein said at least one non-essential amino acid is histidine.

6. Food integrator according to claim 3, wherein said excipients are thickening agents, emulsifiers, anti-caking agents, sweeteners and organoleptic improver flavouring agents.

7. Food integrator according to anyone of the preceding claims, wherein said food integrator is in the powder form.

8. Food integrator according to anyone of the preceding claims, whose suggested posology provides for taking about 10 g preferably dissolved into about 200 ml of water, preferably replacing lunch, preferably alternating between 2 consecutive days with said food integrator and 2 days with normal meals until reaching the ideal weight.

9. Use of the food integrator according to anyone of the preceding claims, within a personalised nutritional program.
